# EUROPÄISCHE PATENTSCHRIFT

(11) **EP 2 372 696 B1**
(45) Veröffentlichungstag und Bekanntmachung des Hinweises auf die Patenterteilung: **11.09.2013**
(21) Anmeldenummer: 10155536.5
(22) Anmeldetag: 04.03.2010
(51) Int. Cl.: G10H 3/18, A63F 13/02

(54) **Steuergerät für eine Spielkonsole sowie Verfahren zur Steuerung einer Spielkonsole**
Control unit for a games console and method for controlling a games console
Appareil de commande pour une console de jeu ainsi que procédé de commande d'une console de jeu

(43) Veröffentlichungstag der Anmeldung: 05.10.2011
(73) Patentinhaber: Goodbuy Corporation S.A., 9490 Vaduz (LI)
(72) Erfinder:
(74) Vertreter: Raffay & Fleck

(56) Entgegenhaltungen:
- US-A- 5 214 232
- US-A1- 2007 256 551
- US-A1- 2009 188 371

## Beschreibung

Die vorliegende Erfindung betrifft ein Steuergerät für eine Spielkonsole mit den Merkmalen des Oberbegriffs des Patentanspruchs 1. Sie betrifft ferner ein Verfahren zum Erzeugen von Steuersignalen für die Steuerung einer Spielkonsole.

Unter dem Begriff "Spielkonsole" soll im Sinne dieser Erfindung jede mikroprozessorgesteuerte Datenverarbeitungseinrichtung verstanden werden, die über entsprechende Schnittstellen mit Steuergeräten verbunden werden kann und zum Ablauf von Spiel-Software oder interaktiver Lernsoftware geeignet ist. Hierunter fallen insbesondere die besonders für diese Zwecke eingerichteten Konsolen, wie sie etwa von den großen Herstellern Nintendo mit der unter der Marke Wii® gehandelten Konsole, SONY mit der Playstation®-Serie und Microsoft mit der XBOX® vertrieben werden, aber auch herkömmliche Personal Computer, die mit entsprechender Software versehen ebenfalls für interaktive Spiel- oder Lernprogramme verwendet werden können.

Derartige Spielkonsolen benötigen typischerweise für die Verwendung und das Bedienen von Spiel- oder Lernprogrammen ein Steuergerät oder mehrere derartige Steuergeräte, die über Datenübermittlungseinrichtungen mit der Spielkonsole verbunden sind. Solche Verbindungen können insbesondere mit Kabel und damit drahtgebunden, aber auch drahtlos ausgebildet sein. Die Steuergeräte sind entweder als universelle Steuergeräte zum Bedienen verschiedener Spiele und Lernprogramme ausgebildet, z.B. in Form so genannter Joysticks oder vergleichbarer Manipulatoren mit genormten Schalter- bzw. Bedienknopfanordnungen, welche Schalter- bzw. Bedienknöpfe je nach zu steuernder Software in den Programmen jeweils eigene Aktionen auslösen. Es gibt aber auch besondere Steuergeräte, die speziell für den Einsatz bestimmter Software entwickelt und konzipiert worden sind. So existiert bspw. ein unter dem Markennamen GUITAR HERO® vertriebenes Spiel, welches das Gitarrenspiel einer E-Gitarre in einer Übungs- oder Konzertsituation simuliert. Für dieses Spiel ist ein in seiner äußeren Form der Form einer typischen E-Gitarre nachempfundenes Steuergerät gebaut und mit entsprechenden Bedienknöpfen und Tastern versehen, welches an die jeweilige Spielkonsole angeschlossen und ausschließlich zum Bedienen dieses besonderen Computerspiels verwendet wird.

Darüber hinaus ist das Steuergerät zwar in der äußeren Form an das Vorbild einer Gitarre angelehnt, in seiner Bedienung jedoch mit dem echten Spiel einer Gitarre nicht vergleichbar.

Um hier eine deutlich verbesserte Annäherung an die Realität herzustellen und für eine Simulation eines Gitarrenspieles auf einer Spielkonsole ein echtes Instrument zu verwenden, ist in der US 5,990,405 vorgeschlagen, ein Instrument, insbesondere eine Gitarre für die Steuerung eines Videospiels auf einer Spielkonsole zu verwenden, indem die elektroakustischen Ausgangssignale (also Audiosignale) des Instrumentes verwendet, in einer speziellen Steuereinrichtung ausgewertet und aufgrund der Auswertung der Audiosignale Steuersignale für die Spielkonsole erzeugt werden.

Weiterer relevanter Stand der Technik findet sich in US 2007/0256551 A1, US 2009/0188371 A1 sowie US 5.214.232.

Auf diese Weise ist es dann zwar möglich, ein echtes Instrument zur Steuerung eines das instrumentenspiel simulierenden Programmablaufes zu verwenden. Allerdings sind bei dieser Lösung auch Einschränkungen gegeben. So ist zunächst einmal die Steuereinheit, die die auf dem Instrument gespielten akustischen Signale auswertet, um daraus dann für das jeweilige Programm verwertbare Steuersignale für die Spielkonsole zu erzeugen, eine sehr spezifische Einheit, die nur für diesen Zweck verwendet werden kann. Darüber hinaus sind die Verwendungsmöglichkeiten auf den Einsatz bestimmter Instrumente reduziert. Denn es müssen die tatsächlich mit dem Instrument gespielten Töne abgegriffen und der Steuereinrichtung, welche diese Töne auswertet und daraus die Steuersignale für die Spielkonsole berechnet, zugeführt werden. Dies kann z.B. bei E-Gitarren, E-Bässen oder sonstigen Instrumenten mit eingebauten elektroakustischen Wandlern geschehen, indem an den die elektrisch gewandelten Signale ausgebenden Ausgang ein entsprechendes Kabel oder dergleichen angeschlossen und der Steuereinrichtung zugeführt wird. Instrumente jedoch, die über keinen integrierten elektroakustischen Wandler verfügen, müssen hierfür aufwändig mit Mikrophonen oder ähnlichen Wandlern versehen werden, die wiederum über Kabelanschlüsse oder dergleichen mit dem eigentlichen Steuergerät zu verbinden sind. Der mit dem Instrument das auf der Spielkonsole ablaufende Programm steuernden Person ist somit durch entsprechende Verkabelung die Bewegungsfreiheit genommen, sie ist jedenfalls in ihrer Bewegungsfreiheit eingeschränkt.

Darüber hinaus ergeben sich auch Schwierigkeiten hinsichtlich der Auswertung der akustischen Signale, die von dem Instrument beim Spiel erzeugt werden, um daraus entsprechende Steuersignale zu generieren. Bei den in der US 5,990,405 beschriebenen virtuellen Anwendungen geht es doch gerade darum, auch bei nicht exaktem Spiel mit dem tatsächlichen Instrument in dem virtuellen Spiel ein wohlklingendes Klangerzeugnis zu generieren. Es muss hier also eine komplizierte Auswertung des tatsächlichen Tones erfolgen, um dann zu entscheiden, welcher Ton tatsächlich gespielt werden sollte und entsprechend von dem Programm wiederzugeben ist. Wegen der vielfachen Möglichkeiten des Erzeugens eines "Fehltones" ist es hier nicht ohne Weiteres nachvollziehbar möglich, die Spielabsicht der mit dem Instrument die Spielkonsole bedienenden Person zu erkennen und in eine entsprechende Sequenz im virtuellen Spiel des Instrumentes auf der Spielkonsole umzusetzen.

In der US 5,393,926 ist ein Verfahren offenbart, bei dem mittels von mit einem MIDI-Wandler einer Gitarre durch deren Spiel erzeugten Signalen eine virtuelle Welt gesteuert werden soll. Auch hier bestehen dem Grunde nach dieselben Probleme wie oben geschildert.

Hier soll mit der Erfindung Abhilfe geschaffen werden, indem ein einfaches und handliches Steuergerät für eine Spielkonsole geschaffen wird, welches einen flexiblen Einsatz mit einem realen Musikinstrument ermöglicht, um dieses zu einem Bedienwerkzeug für eine Spielkonsole umzufunktionieren, welches darüber hinaus aber auch anderweitige Verwendungsmöglichkeiten, z.B. eine herkömmliche Verwendung zur Steuerung der Spielkonsole über Taster und Schalter erlaubt. Auch soll mit der Erfindung grundsätzlich ein flexibles Verfahren zum Erzeugen von Steuersignalen für die Steuerung einer Spielkonsole mithilfe eines Instrumentes angegeben werden.

Diese Aufgabe wird erfindungsgemäß gelöst durch ein Steuergerät mit den Merkmalen des Patentanspruchs 1. Vorteilhafte Weiterbildungen eines solchen Steuergerätes sind in den abhängigen Ansprüchen 2 bis 10 angegeben. Ein erfindungsgemäßes Verfahren zum Erzeugen von Steuersignalen für die Steuerung' einer Spielkonsole mithilfe eines Instrumentes ist in Anspruch 11 charakterisiert. Anspruch 12 nennt eine vorteilhafte Weiterbildung desselben.

Die Grundidee des erfindungsgemäßen Steuergerätes für eine Spielkonsole besteht darin, dass dieses in üblicher Weise ein Gehäuse, ein in dem Gehäuse angeordnetes, elektronisches Steuerelement, an dem Gehäuse angeordnete, mit dem Steuerelement verbundene Eingabeelemente sowie eine Datenübermittlungseinrichtung zum Übermitteln von Steuerdaten an die Spielkonsole aufweist. Für die spezifische Anwendung und das Zusammenwirken mit einem Lauteninstrument, mit dem zusammen es eine Steuereinrichtung zum Steuern der Spielkonsole für bestimmte Anwendungen, typischerweise das virtuelle Spiel eines solchen Lauteninstrumentes bildet, weist das Steuergerät in seinem Gehäuse in erfindungsgemäßer Weise einen Sensorabschnitt auf, in welchem Sensorfelder angeordnet sind. Die Sensorfelder sind dabei in einer Anzahl und in einem Abstand zueinander angeordnet, die der Anzahl und dem Abstand der Saiten des Lauteninstrumentes entsprechen. Diese Sensorfelder bilden Eingabeelemente, deren Bedienung durch die Manipulation der Saiten des Lauteninstrumentes erfolgt. Hierzu sind die Sensorfelder, wenn das Steuergerät mit dem Sensorabschnitt an einem Lauteninstrument angeordnet wird, unterhalb der Saiten so verteilt, dass jeweils eines der Sensorfelder unterhalb einer diesem zugeordneten Saite zu liegen kommt, ohne die Saite zu berühren. Die Sensorfelder sind dazu eingerichtet, den Abstand der jeweils zugeordneten Saite zu dem Sensorfeld zu erfassen und zu bestimmen. Dieser Abstand bildet letztlich die eigentliche Eingabe. Er wird als Signal von dem jeweiligen Sensorfeld zu dem elektronischen Steuerelement übermittelt, das daraus Steuerdaten für die Spielkonsole und für das auf dieser ausgeführte Programm ableitet.

Ein Lauteninstrument im Sinne dieser Erfindung ist in einer aus der Instrumentenkunde stammenden Definition im weiteren Sinne zu verstehen. Danach sind Lauteninstrumente solche, die aus einem Resonanzkasten und einem Saiten tragenden Hals zusammengesetzt sind und bei denen die Saiten parallel zur Decke des Resonanzkastens verlaufen. Insbesondere zählen zu Lauteninstrumenten dieser Definition Gitarren, Violinen, Fiedeln, Bässe, Banjos und dgl.. Im Verständnis der Erfindung erstreckt sich diese Definition insbesondere auch auf Elektro-Varianten solcher Instrumente, insbesondere also E-Gitarren, E-Bässe, E-Violinen und dgl..

Mit dem erfindungsgemäßen Steuergerät werden mithin nicht etwa von dem Lauteninstrument bei dessen Spiel erzeugte akustische Töne erfasst und für die Steuerung des auf der Spielkonsole laufenden Programmes ausgewertet, sondern es wird ein Abstand der jeweiligen Saite des Lauteninstrumentes zu dem Sensorfeld als Eingabe und "Rohdatum" für die Generierung von Steuersignalen für die Spielkonsole hergenommen. Die Abstandsmessung erfolgt dabei typischerweise und bevorzugt in zwei Stufen, nämlich einer statischen Abstandsmessung und einer dynamischen Messung. Die statischen Abstandsmessung wird insbesondere in einem ersten Schritt vorgenommen und ausgewertet, wenn eine Bedienperson eine (oder mehrere) Saite(n) des Lauteninstrumentes am Hals desselben niederdrückt, um diese zu verkürzen und für den darauf folgenden Anschlag einen zu spielen gewünschten Ton einzustellen. Die daraus resultierende Abstandsverkürzung zwischen der Saite und dem darunter liegenden Sensorfeld wird mittels der Sensoranordnung(en) in letzterem erfasst. Aus dieser ersten Abstandsveränderung (statischer Natur) kann zweierlei Information abgeleitet werden: Zunächst einmal steht zu erwarten, dass die Bedienperson die so verkürzte Saite in einem zeitlich dicht darauf folgenden Schritt anschlagen wird, um mit dieser einen Ton zu erzeugen. Ferner kann aus der Abstandsverringerung, die um so größer sein wird, je kürzer der Spieler die Saite greift (also je höher der Ton sein soll, den zu spielen er beabsichtigt) bereits eine erste Vorauswahl eines zu spielen angestrebten Tones getroffen und erste Vorinstruktionen an das Programm der Spielkonsole geben werden.

Der zweite Aspekt, die dynamische Abstandsmessung erfolgt dann, wenn der tatsächliche Anschlag der Saite folgt. Dann schwingt die Saite, so dass sich regelmäßige Abstandsveränderungen ergeben. Aus diesen Abstandsveränderungen wird zunächst geschlossen, dass der Ton nun gespielt werden soll, also ein Triggersignal für das Abspielen eines virtuellen Tones auf der Spielkonsole gegeben. Darüber hinaus kann die Amplitude des Ausschlages, also die Differenz zwischen nächster und weitester Entfernung der Saite von dem Sensorfeld ausgewertet werden, um die Lautstärke des virtuell zu erzeugenden Tones zu justieren. Je größer die Amplitude ist, desto lauter sollte der Ton gespielt werden. Aus einem Abklingverhalten kann zudem auf die Härte des Anschlages und damit den "pitch" des Tones geschlossen werden. Schließlich kann eine Auswertung der Abstandsveränderung in ihrem zeitlichen Verlauf genutzt werden, um auf eine tatsächliche Frequenz der schwingenden Saite und damit auf den tatsächlich gespielten Ton zu schließen und darüber weitere Informationen zur Erzeugung eines virtuellen Tones an die Spielkonsole zu geben.

All diese Informationen und Daten werden mithin nicht aus der Aufnahme und Registrierung eines tatsächlich mit dem Instrument erzeugten Klanges bzw. einer Note gewonnen, sondern aus bloßen Abstandsauswertungen und weiteren Analysen der gewonnenen Abstandsdaten. Dies vereinfacht insbesondere auch eine Auswahl des im virtuellen Spiel wiederzugebenden Tones. So ist es insbesondere möglich, mit der Software z.B. durch Einstellen eines Schwierigkeitsgrades Fenster oder Bereiche um eine exakte Zielfrequenz bzw. eine richtige Griffposition und Spielweise des Lauteninstrumentes zu wählen, innerhalb dessen der Ton als klarer und richtig gespielter Ton in der virtuellen Spielweise des Instrumentes wiedergegeben wird. Lediglich außerhalb eines solchen Fensters kann, um dem Spieler einen Fehler aufzuzeigen, ein "schiefer" und nicht richtig getroffener Ton auch in der virtuellen Wiedergabe des Instrumentes ausgegeben werden. Hier eröffnet sich nun die Möglichkeit, dieses Fenster bspw. in der Software des Spiels auf der Spielkonsole variabel einstellbar zu gestalten, z.B. durch die mögliche Vorgabe unterschiedlicher Schwierigkeitsgrade, wobei bei höheren Schwierigkeitsgraden das Fenster immer enger um den tatsächlich zu treffenden Ton bzw. den zu erreichenden Griff an dem Lauteninstrument gesetzt wird. Auf diese Weise kann ein solches Programm im Zusammenspiel mit dem echten Instrument eines Nutzers auch als Lernprogramm zum Erlernen des Spiels eines Lauteninstrumentes genutzt werden, ohne dass der Nutzer von Misserfolgen wegen nicht sitzender Griffe an dem Lauteninstrument (z.B. der Geige oder Gitarre) frustriert wird. Durch mit der Zeit fortwährendes Verkleinern der Fenster, also Erhöhen des Schwierigkeitsgrades, wird dem Spieler des Lauteninstrumentes auch für die virtuelle Wiedergabe ein immer genaueres Spielen des realen Lauteninstrumentes abverlangt, so dass er letztlich spielerisch die Fertigkeiten eines sicheren Spiels dieses Lauteninstrumentes erlernt. Im Zusammenhang mit einer entsprechenden Software auf einer Spielkonsole hat das erfindungsgemäße Steuergerät mithin auch einen pädagogischen Effekt und Nutzen.

Die Abstandsmessung kann, wenn die Saiten des Lauteninstrumentes aus einem elektrisch leitenden Material bestehen oder ein solches enthalten, bspw. mit einem solchen ummantelt sind, insbesondere mit zur induktiven Abstandsmessung eingerichteten Sensoranordnungen in den Sensorfeldern erfolgen. Induktive Abstandsmessungen sind in der Technik bekannt und können mit vergleichsweise kleinen Bauteilen und hoher Genauigkeit und zeitlicher Auflösung realisiert werden. Hier wird die Veränderung des Stromflusses bzw. des Spannungsverlaufes in einem Schwingkreis durch bei Annähern bzw. Entfernen eines leitenden Gegenstandes (hier der Saite) hervorgerufenen Änderungen der durch die Sensoranordnungen erzeugten elektromagnetischen Felder ausgewertet.

Um nicht nur Bewegungen und Abstandsveränderungen einer Saite in einer Richtung im Wesentlichen senkrecht zu einer Bezugsebene (typischerweise der Ebene, innerhalb derer die Saiten verlaufen bzw. einer Oberflächenebene des Halses) aufnehmen und für die Steuerung der Spielkonsole auswerten zu können, sondern auch Saitenbewegungen quer dazu (also innerhalb der genannten Ebene) ist es von Vorteil, wenn pro Sensorfeld quer zu der Längsrichtung der über dem Sensorfeld in der vorgesehenen Anordnung des Steuergerätes mit seinem Sensorabschnitt unterhalb der Saiten des Lauteninstrumentes versetzt zu einander zwei Sensoranordnungen angeordnet sind, die insbesondere solche zur induktiven Abstandsmessung sein können. Hierdurch können beim Spiel z.B. einer Gitarre, insbesondere einer E-Gitarre zur Tonveränderung gewollt eingesetzte Querbewegungen und Verzerrungen (das sogenannte Bending, hiermit werden die Töne der schwingenden Saite um bis zu einem Halbton verändert) erfasst werden. Mit dieser so zusätzlich zu erfassenden Bewegungsrichtung und damit -größe kann eine noch umfangreichere und realitätsnähere Steuerung der Spielkonsole bzw. eines darauf laufenden virtuellen und interaktiven Programmes zum Spiel eines Lauteninstrumentes erfolgen.

Mit besonderem Vorteil kann das erfindungsgemäße Steuergerät als weitere Eingabeelemente (zusätzlich zu den Sensorfeldern) herkömmliche Steuerknöpfe und/oder Steuerkreuze aufweisen. Herkömmlich in diesem Sinne bedeutet insbesondere, dass Steuerkreuze bzw. -knöpfe in Anordnungen und Funktionsbelegungen vorgesehen sind, wie sie der genormten Ausgestaltung von Steuergeräten für die gängigen Spielkonsolen entspricht. Durch eine solche Ausgestaltung ist das erfindungsgemäße Steuergerät nicht nur für einen Einsatz im Zusammenhang mit einem Lauteninstrument geeignet, sondern kann auch für die Steuerung anderer auf der Spielkonsole laufender interaktiver Programme verwendet werden, ist mithin als universelles Steuergerät einsetzbar. Dabei ist das Steuergerät insbesondere und mit Vorteil mit einem im Wesentlichen knochenförmig gestalteten Gehäuse versehen mit einem flacheren mittleren Abschnitt, der den Sensorabschnitt bildet, und verbreiterten äußeren Abschnitten. In den verbreiterten äußeren Abschnitten, die mit Vorteil ergonomisch zum Ergreifen mit der rechten und linken Hand ausgebildet sind, können dann entsprechend den normativen Vorgaben für übliche Steuergeräte für die gängigen Spielkonsolen die weiteren Steuerknöpfe und/oder Steuerkreuze angeordnet sein. Für eine Anordnung an dem Lauteninstrument kann das Steuergerät dann mit dem mittleren, flacheren Abschnitt unterhalb der Saiten desselben angeordnet werden, so dass jede Saite dem zugehörigen Sensorfeld gegenüber liegt, ohne dieses zu berühren. Die Anordnung des Steuergerätes wird dabei insbesondere im Bereich des Resonanzkörpers (Korpus) des Lauteninstrumentes erfolgen.

Das erfindungsgemäße Steuergerät wird bevorzugt mit einer in dem Gehäuse angeordneten elektrischen Versorgungseinheit, insbesondere einem Akkumulator, ausgestattet. Dies erlaubt eine von elektrischen Versorgungsleitungen unabhängige Verwendung des Steuergerätes. Damit die elektrische Versorgungseinheit mit elektrischer Energie aufgeladen werden kann, ist bei dem Steuergerät bevorzugt ein Ladeanschluss zum Verbinden eines Ladekabels vorgesehen. Dieser Anschluss kann z.B. auch gekoppelt mit einem Datenanschluss gebildet sein, z.B. in Form eines USB 2.0 Anschlusses.

Bevorzugt weist die Datenübermittlungseinrichtung einen Übermittlungskanal zum drahtlosen Übermitteln von Steuerdaten an die Spielkonsole auf. Dieser drahtlose Übermittlungskanal kann dabei nach einem der bekannten gängigen Standards, insbesondere Bluetooth oder einer IR-Schnittstellte und dem entsprechenden Protokoll arbeiten. Die Ausbildung des Übermittlungskanals zur drahtlosen Übermittlung der Steuerdaten an die Spielkonsole ist insbesondere dann von Vorteil, wenn das Steuergerät im Zusammenhang mit dem Lauteninstrument verwendet werden soll. So erübrigt sich ein Kabelanschluss an das Steuergerät, das Lauteninstrument kann ohne jegliche Kabelanbindung von der spielenden Person frei verwendet werden, was z.B. bei einem virtuell gespielten Rockkonzert entsprechende Bewegungen wie auf einer Bühne ermöglicht, ohne dass die spielende Person hier durch Kabel behindert wäre.

Das elektronische Steuerelement wird bevorzugt ein Mikroprozessor sein.

Um das Steuergerät schließlich an dem Lauteninstrument festzulegen, weist dieses mit Vorteil auf einer Unterseite Befestigungselemente zur lösbaren Befestigung an dem Lauteninstrument auf. Diese Befestigungselemente können z.B. miniaturartig gebildete Saugnäpfe, ein doppelseitiger Klebestreifen, ein Klettband oder dgl. sein.

Das erfindungsgemäße Verfahren zum Erzeugen von Steuerdaten für die Steuerung einer Spiel konsole, wie es in Anspruch 11 angegeben ist, kann mit Vorteil mit einem Steuergerät nach oben beschriebener Bauart durchgeführt werden. Es ist aber auch möglich die entsprechenden Sensoren und Elektronikbauteile an dem Lauteninstrument fest anzubringen und darin bereits beim Bau desselben zu integrieren, so dass das Lauteninstrument von vornherein als eine Art "Hybrid" gebaut ist mit einer realen Spielmöglichkeit und integrierten Elemente, die einen Anschluss an eine Spielkonsole ermöglichen und die Verwendung des Instrumentes als Steuereinrichtung für die Konsole. Die dafür in dem Lauteninstrument einzubringenden Elemente sind aber stets andere als die für die Erfassung der akustischen Signale (des tatsächlichen Klanges) ggf. genutzten Elemente, wie z.B. Pick Ups bei einer E-Gitarre.

Weitere Vorteile und Merkmale der Erfindung ergeben sich aus der nachfolgenden Beschreibung eines Ausführungsbeispiels anhand der beigefügten Figuren. Dabei zeigen:
- Figur 1: die Darstellung des korpusseitigen Teils einer E-Gitarre als Beispiel eines Lauteninstrumentes, bestückt mit einem erfindungsgemäßen Steuergerät in einer ersten Ausführungsvariante,
- Figur 2: vergrößert einen Ausschnitt der Darstellung aus Figur 1 zur detaillgenaueren Wiedergabe des unterhalb der Saiten der E-Gitarre angeordneten Steuergerätes,
- Figur 3: in einem dem in Figur 2 dargestellten Ausschnitt vergleichbaren Ausschnitt ein an der E-Gitarre angeordnetes Steuergerät in einer zweiten Ausführungsform,
- Figur 4: das Steuergerät in der zweiten Ausführungsform losgelöst von der Gitarre zur Verwendung für die manuellen Steuerung der Spielkonsole über die herkömmlichen Steuerknöpfe,
- Figur 5: in zwei Darstellungen (a) und (b) die unterschiedliche Position einer Saite der E-Gitarre relativ zu einem Sensorfeld des Steuergerätes in unbetätigtem (5a) und im durch Niederdrücken der Saite an einem Bund verkürzten Zustand (5b) und
- Figur 6: schematisch den Aufbau zum Erfassen des Abstandes der Saite zum Sensorfeld und der weiteren Verarbeitung und Weitergabe der so gewonnenen Daten durch das Steuergerät.

Anhand der schematischen beigefügten Darstellungen, in denen in unterschiedlicher Darstellung und Anordnung zwei verschiedene Ausführungsvarianten eines erfindungsgemäßen Steuergerätes dargestellt sind, wird die Erfindung in Form des Steuergerätes sowie eines Verfahrens zum Generieren von Steuerdaten für eine Spielkonsole nachstehend noch einmal näher exemplarisch dargestellt.

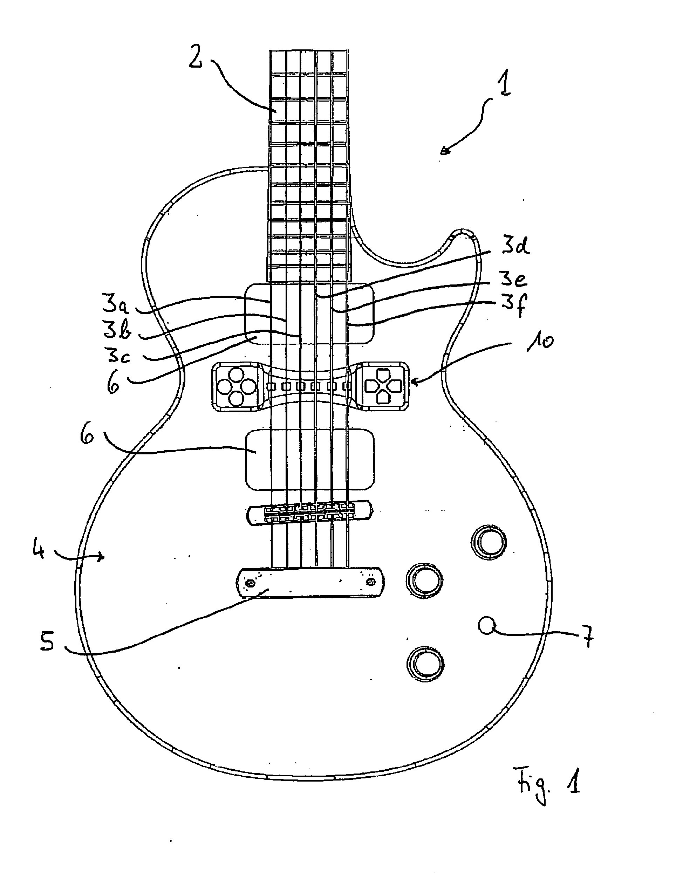

In Figur 1 ist hierzu zunächst ein Ausschnitt einer E-Gitarre 1 gezeigt, an der ein Steuergerät 10 in einer ersten Ausführungsvariante angeordnet ist. Die E-Gitarre 1 ist ein herkömmlich und an sich bekanntes Lauteninstrument, welches insbesondere zu einem realen Gitarrenspiel taugt. Sie verfügt in für E-Gitarren, die hier exemplarisch für das gesamte Anwendungsfeld der Erfindung mit anderen Lauteninstrumenten stehen, typischer Weise über einen Hals 2, über den hier insgesamt sechs Saiten 3a - 3f geführt sind. Die Saiten 3a - 3f laufen auf dem Korpus 4, welcher mit dem Hals 2 verbunden ist, auf einer Befestigungsvorrichtung 5 auf und sind dort mit einem Ende festgelegt. Mit ihrem anderen Ende laufen die Saiten am gegenüber liegenden hier nicht dargestellten Ende des Halses 2 an einem Kopf auf Wirbeln auf, mit denen sie ge- und entspannt und so gestimmt werden können.

Unterhalb der Saiten 3a-f sind bei diesem Modell der E-Gitarre 1 zwei elektroakustische Wandler, so genannte Pick Ups, 6 angeordnet, womit der Klang der schwingenden Saiten 3a-f in ein elektrisches Signal umgewandelt wird, das über einen Anschluss 7 abgenommen und einem Verstärker zugeführt werden kann.

Das Steuergerät 10 ist an der E-Gitarre 1 unterhalb der Saiten 3a bis 3f lösbar angeordnet, so dass die E-Gitarre 1 ohne das darauf angebrachte Steuergerät 10 in üblicher Weise zum Erzeugen realer Musik gespielt werden kann.

Zum Festlegen des Steuergerätes 10 an dem Gitarrenkorpus 4 verfügt dieses an seiner Unterseite über eine (hier nicht gezeigte) Struktur, insbesondere kleine Saugnäpfe, mit denen es lösbar aber in seiner Position fixiert an der E-Gitarre 2 angeordnet werden kann.

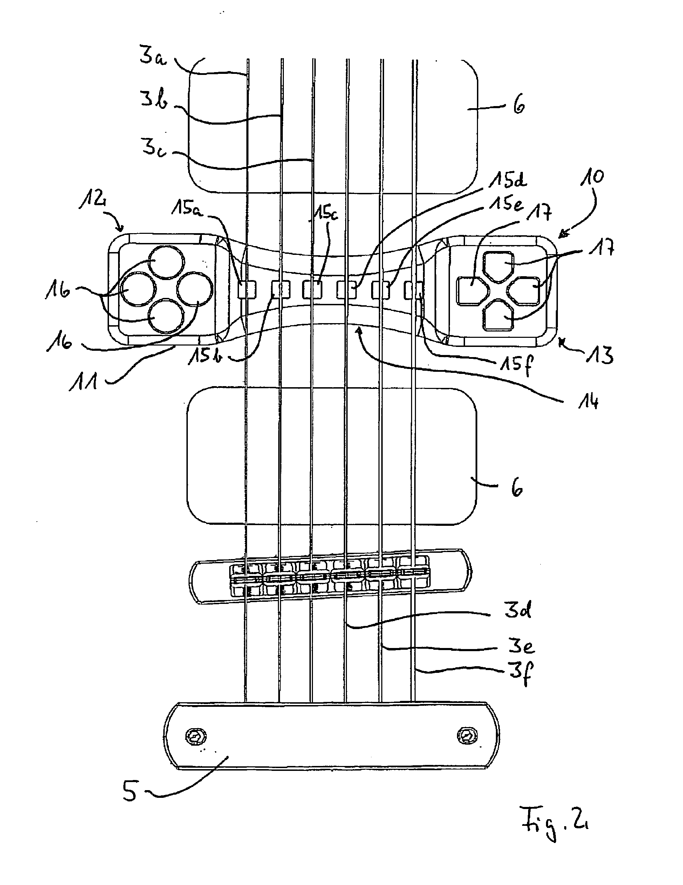

Das Steuergerät 10, welches in Figur 2 in seiner Anordnung auf dem Korpus der Gitarre noch einmal in einem vergrößerten Ausschnitt dargestellt ist, dient im Zusammenwirken mit der E-Gitarre 1 allein der erweiterten Verwendung dieser E-Gitarre 1 zum Erzeugen von Steuersignalen für eine Spielkonsole. Insbesondere zielt dieses darauf ab, in einem auf der Spielkonsole laufenden Programm ein virtuelles Lauteninstrument, insbesondere eine virtuelle E-Gitarre, zu steuern und die virtuelle Klangerzeugung zu bestimmen. Unter virtueller Klangerzeugung ist dabei nicht zwingend eine nach Art eines Synthezisers künstlich hergestellte Klangfolge zu verstehen, sie kann auch durch Aneinanderreihung von real aufgenommenen, je nach Spielsituation ausgewählten Tonsequenzen durch die Spielsoftware gebildet werden. Dies ist jedoch abhängig von der Spielsoftware selbst; das Steuergerät 10 kann unabhängig von der Art der Software zum Steuern der Spielkonsole mittels der E-Gitarre 1 als Eingabegerät an derselben befestigt und verwendet werden.

In Figur 2 ist einem vergrößertem Ausschnitt noch einmal die Anordnung des Steuergerätes 10 unterhalb der Saiten 3a - 3f am Korpus der E-Gitarre zwischen den Pick Ups 6 dargestellt. Hierbei ist gut zu erkennen, dass das Steuergerät 10 über ein knochenförmig gebildetes Gehäuse 11 verfügt mit vergrößerten und verdickten Saitenabschnitten 12 und 13 und einem dazwischen liegenden, verjüngten und flacheren Sensorabschnitt 14, der bei Anordnung des Steuergerätes 10 unterhalb der Saiten 3a - 3f der E-Gitarre liegt und über dem die Saiten 3a-f frei schwingbar und im Abstand zu dem Sensorabschnitt 14 verlaufen.

In dem Sensorabschnitt 14 sind Felder mit Sensoranordnungen 15a - 15f angeordnet, die so platziert und von einander beabstandet sind, dass sie jeweils unterhalb einer ihnen zugeordneten Saite 3a - 3f zu liegen kommen, wenn das Steuergerät 10 korrekt am Korpus der E-Gitarre festgelegt ist. Somit liegt in dem in Figur 2 gezeigten, korrekt montierten Zustand des Steuergerätes 10 die Sensoranordnung 15a unterhalb der Saite 3a, die Sensoranordnung 15b liegt unterhalb der Saite 3b, die Sensoranordnung 15c liegt unterhalb der Saite 3c, die Sensoranordnung 15d liegt unterhalb der Saite 3d, die Sensoranordnung 15e liegt unterhalb der Saite 3e, und die Sensoranordnung 15f liegt unterhalb der Saite 3f. Die Sensoranordnungen 15a - 15f sind eingerichtet, um den Abstand der ihnen jeweils zugeordneten Saite 3a - 3f zu dieser Sensoranordnung 15a - 1 5f zu bestimmen bzw. bei sich veränderndem Abstand unterschiedliche Signale auszugeben. In dem bevorzugten Ausführungsbeispiel umfassen die Sensoranordnungen 15a - 15f dabei Induktionsnäherungssensoren (-abstandssensoren), wie sie im Stand der Technik bekannt sind und vielfach in anderen Verwendungen eingesetzt werden. Diese Sensoren enthalten jeweils einen Schwingkreis, der mittels elektrischer Versorgung zum Schwingen angeregt wird und ein lokales elektromagnetisches Feld erzeugt. Die Saiten 3a - 3f sind bei der E-Gitarre aus einem leitenden Material gebildet bzw. einem solchen ummantelt, allein schon deshalb, um mit den Pick-Ups 6 zusammenwirken zu können. Durch eine Veränderung der Position der jeweils zugeordneten Saite 3a - 3f in dem durch den jeweiligen Schwingkreis in der Sensoranordnung 15a - 15f erzeugten elektromagnetischen Feld ergibt sich eine Rückkopplung auf dieses Feld, welches sich verändert. Diese Veränderung des Feldes ergibt wiederum eine Rückkopplung auf die Strom- und Spannungsversorgung des Schwingkreises und kann als Signal für eine Lageveränderung, also eine Abstandsveränderung der jeweiligen Saite 3a - 3f zu der zugeordneten Sensoranordnung 15a - 1 5f ausgewertet werden. Diese Signale der Auswertung über den Abstand bzw. die Abstandsveränderung werden von den Sensoranordnungen 15a - 15f einem hier nicht näher dargestellten, in dem Gehäuse 11 des Steuergerätes 10 angeordneten, elektronischen Steuerelement zugeführt, welches insbesondere ein Mikroprozessor ist. Dort werden die eingehenden Daten ausgewertet und aus diesen Daten in später noch zu beschreibender Weise Steuersignale generiert, die an eine Spielkonsole in einem für diese lesbaren Format (z.B. nach MIDI-Formatvorgaben) übermittelt werden. Hierfür weist das Steuergerät 10 innerhalb des Gehäuses 11 angeordnet auch eine Datenübermittlungseinrichtung auf, die insbesondere drahtlos arbeiten kann. Die Daten werden z.B. nach dem Protokoll Bluetooth oder aber nach einem Infrarotprotokoll an einen entsprechenden Empfänger der Spielkonsole übermittelt. In dem Gehäuse 11 ist darüber hinaus eine autarke Energieversorgung, insbesondere ein Akkumulator angeordnet, der sowohl den Mikroprozessor als auch die Sensoranordnungen und weitere Elemente und Funktionen des Steuergerätes 10 mit elektrischer Energie speist. Über einen an dem Gehäuse 11 angeordneten, hier nicht gezeigten Ladeanschluss kann dieser Akkumulator mit elektrischer Energie von extern versorgt und aufgeladen werden. Das Steuergerät 10 kann neben der drahtlosen Übertragungseinrichtung auch über einen Anschluss für ein Datenübertragungskabel verfügen, z.B. nach dem USB-Standard (derzeit USB 2.0).

Ferner ist zu erkennen, dass das Steuergerät 10 in den Seitenabschnitten 12 und 13 weitere, manuell zu bedienende Steuerelemente aufweist. So sind in dem mit dem Abschnitt 12 insgesamt vier rund ausgebildete Tasterschalter 16 angeordnet, die entsprechend den normativen Vorgaben von Spielkonsolenherstellern für Steuergeräte belegt und mit einer Signalausgebe verbunden sind, um das Steuergerät 10 auch in später noch zu beschreibender von der E-Gitarre losgelöster Weise für eine herkömmliche manuelle Steuerung der Spielkonsole verwenden zu können. In gleicher Weise sind in den Seitenabschnitt 13 vier weitere Tasterschalter 17 angeordnet, die zusammen ein Steuerkreuz darstellen. Auch diese entsprechen den normativen Vorgaben der Spielkonsolenhersteller, so dass sie für die "herkömmliche" Steuerung einer Spielkonsole mittels manueller Manipulation des erfindungsgemäßen Steuergerätes eingesetzt werden können.

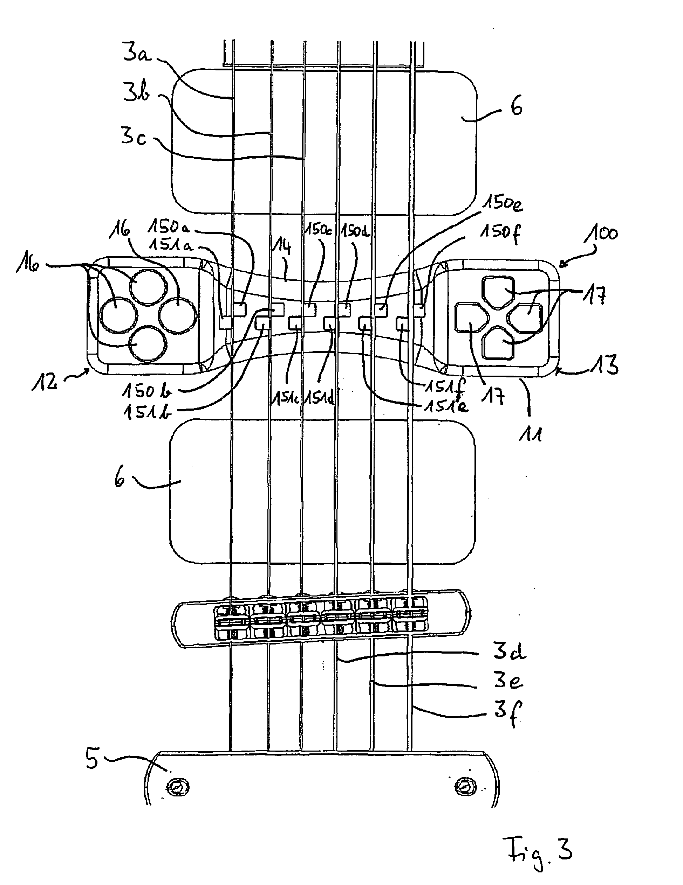

In Figur 3 ist in einer der Figur 2 vergleichbaren Darstellung ein zweites Ausführungsbeispiel eines Steuergerätes 100 dargestellt. Dieses entspricht in seinem grundsätzlichen prinzipiellen Aufbau dem Steuergerät 10, so dass insoweit hier in der Figur 3 identische Bezugsziffern wie in Figur 2 verwendet werden, auf die Beschreibung dieser Teile und ihrer grundsätzlichen Funktion zu Figur 2 verwiesen werden kann. Auch der innere Aufbau des Steuergerätes 100 gleicht dem des Steuergerätes 10 aus Figur 2, so dass auch diesbezüglich das oben Gesagte gilt.

Das Steuergerät 100 unterscheidet sich von dem Steuergerät 10 lediglich durch die Gestaltung der bei dem Steuergerät 10 durch die Sensoranordnungen 15a - 1 5f gebildeten Sensorfelder unterhalb der Saiten 3a - 3f. Während bei dem Steuergerät 10 jedes Sensorfeld mit einer einzigen Sensoranordnung 15a - 1 5f, die zentral unterhalb der Saite anzuordnen ist, bestückt ist, weisen bei der Ausführungsform gemäß dem Steuergerät 100 die Sensorfelder, die einer jeden der Saiten 3a - 3f zuzuordnen sind, jeweils zwei Sensoranordnungen 150a - 150f und 151a- 151f auf. Die jeder Saite zugeordneten Sensoranordnungen, also z.B. in Bezug auf die Saite 3a die Sensoranordnungen 1 50 a und 1 51 a, sind sowohl in Richtung quer zum Verlauf der Saite 3a als auch in deren Längsrichtung versetzt zueinander angeordnet. Beide Sensoranordnungen eines Sensorfeldes enthalten auch in diesem Ausführungsbeispiel induktive Näherungssensoren (Abstandssensoren), mit denen in der oben bereits beschriebenen Weise eine Veränderung der Lage der Saite zu den jeweiligen Sensoranordnungen eine entsprechende Signalausgabe an dem Sensor bewirkt. Durch die Wahl von zwei Sensoranordnungen 150a - 150f und 151 a - 151 f zu den jeweiligen Saiten 3a - 3f können mit einer solchen Anordnung nicht nur Veränderungen der Entfernung der Saite in einer Richtung senkrecht zu der Verlaufsebene des Sensorabschnittes 14, sondern auch quer dazu erfasst werden. Diese Art der Ausgestaltung ermöglicht es, beim Spiel des Lauteninstrumentes Effekte festzustellen, die von einem Spieler durchaus gewollt sind und bei denen die Saiten beim Erfassen am Hals seitlich über den jeweiligen Bund verschoben werden (sogenanntes Bending). Durch dieses Bending wird eine Veränderung der Tonlage des gespielten Tones erzielt, es können hier auch Tremoloeffekte oder dgl. gespielt werden. Das Steuergerät 100 ist durch die Auswertung von zwei Abstandssignalen zu jeder Saite 3a - 3f (erzeugt durch die jeweiligen Sensoranordnungspaare 150a - 151 a bis 150f - 151f) in der Lage, auch diese Saitenbewegung zu erfassen und in dem Mikroprozessor entsprechende Signalauswertungen vorzunehmen und Signal korrespondierend zu einem solchen Spiel an die Spielkonsole zu übertragen, die entsprechend reagieren und das virtuelle Spiel des Lauteninstrumentes anpassen kann.

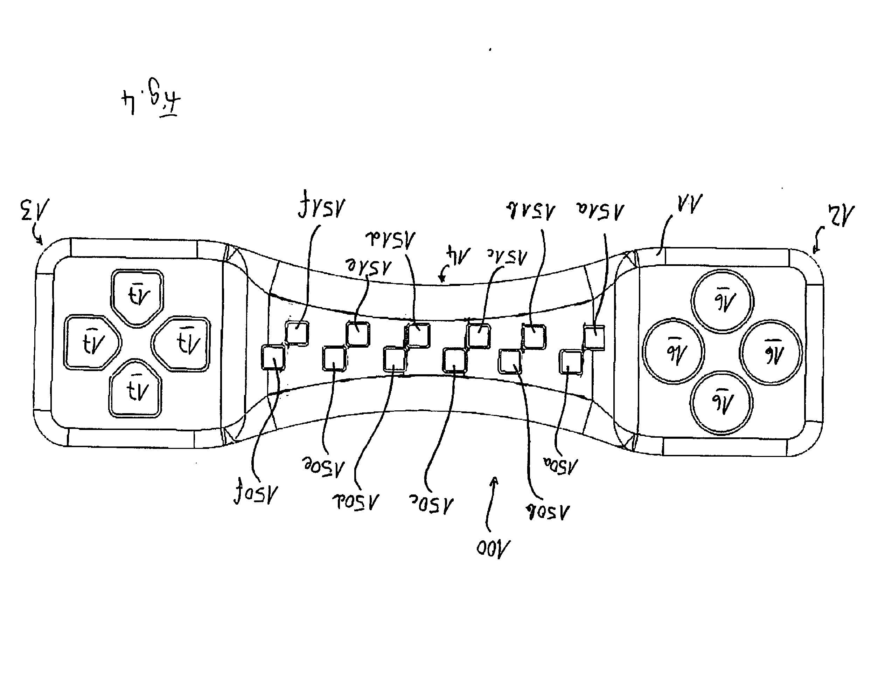

In Figur 4 ist beispielhaft die zweite Ausgestaltungsform des Steuergerätes 100 losgelöst von dem Lauteninstrument dargestellt. In dieser Variante kann es für die Steuerung üblicher und herkömmlicher Spiele auf der Spielkonsole verwendet werden, indem die Tasterknöpfe 16 und 17 bedient und ausgehend und abgeleitet von dieser Bedienung entsprechende Steuersignale an die Spielkonsole übermittelt werden. Hierzu sind die Tasterknöpfe 16 bzw. 17 in entsprechend normierter Weise vorgesehen, um kompatibel zu üblichen Steuergeräten mit einer Spielkonsole zusammenwirken zu können. Hierfür kommuniziert der Mikroprozessor in dem Steuergerät 100 mit der Spielkonsole über übliche Schnittstellen, sei es drahtlos (z.B. Bluetooth), sei es über eine kabelgebundene Schnittstelle (z.B. USB). Die Sensoranordnungen 150a - 150f und 151a - 151f sind bei dieser Funktion ohne Belang, sie finden keine Verwendung. Für die "handgehaltene" Verwendung des Steuergerätes 100 ist die ergonomische Ausgestaltung in der Knochenform besonders günstig, da das Gerät mit beiden Händen an den Seitenabschnitten 12 und 13 erfasst und dort die Tasterschalter 16 bzw. 17 bspw. mit dem Daumen der Hände bedient werden können.

Die eingangs bereits diskutierte, fixierte Anordnung des Steuergerätes 10 bzw. 100 unterhalb der Saiten 3 des Lauteninstrumentes für die Verwendung im Zusammenhang mit demselben ist wichtig, um eine durchgehende und richtige Eichung der unter den Saiten 3a bis 3f angeordneten Sensorfeldern zu erzielen. Nach der Anordnung des Steuergerätes 10 bzw. 100 an der Gitarre muss zunächst eine Eichung erfolgen, da die Anordnung jeweils an leicht unterschiedlichen Positionen erfolgen wird. Hierzu wird jede der Saiten 3 an einer oder zwei vorgegebenen Stellen (Bünden) am Hals heruntergedrückt, und die jeweils zugeordnete Sensoranordnung 15 bzw. die Sensoranordnungen 150,151 nehmen die Abstandsveränderung auf. Anhand bekannter Kurven, wie durch unterschiedliche Griffe auf den Bünden die Saiten in ihrem Abstand zu ihrem Korpus sich verändern, kann so eine Eichkurve ermittelt und so für einen bestimmten Abstand der Saite zu der Sensoranordnung ein Rückschluss auf den Griff der spielenden Person getätigt werden.

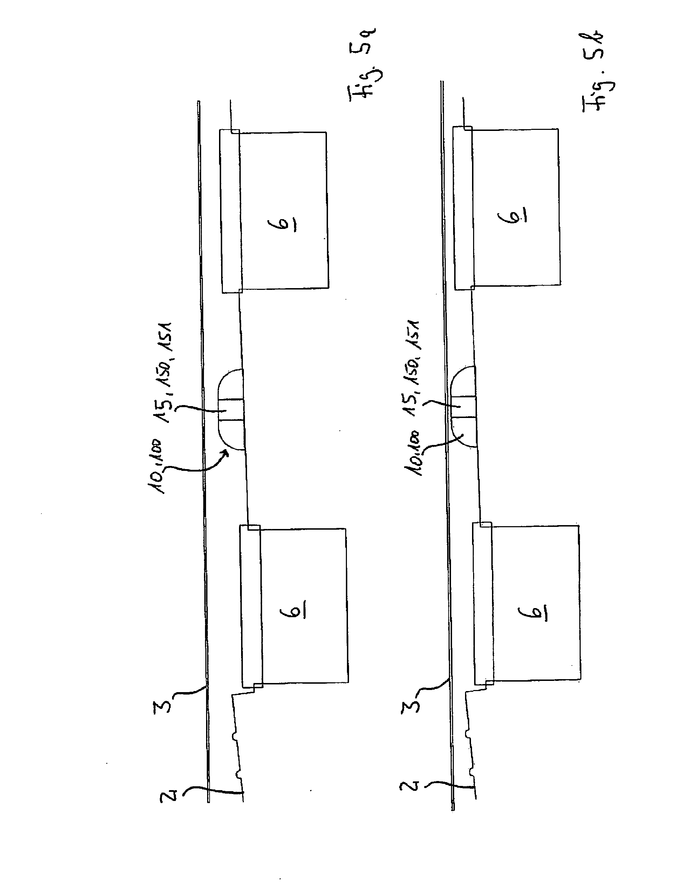

In den Figuren 5a und 5b ist schematisch dargestellt, wie sich beim Verkürzen einer Saite 3 durch Herunterdrücken an einem Bund am Hals 2 der E-Gitarre der Abstand dieser Saite 3 zu der Sensoranordnung 15, 150, 151 an dem unterhalb der Saite 3 angeordneten Steuergerät 10, 100 verändert. Durch diese Abstandsveränderung wird von der Sensoranordnung 15, 150, 151 ein Signal ausgelöst und dem Mikroprozessor in dem Steuergerät 10, 100 zugeführt, welcher daraus entsprechende Steuerdaten für die Steuerung der Spielkonsole generiert.

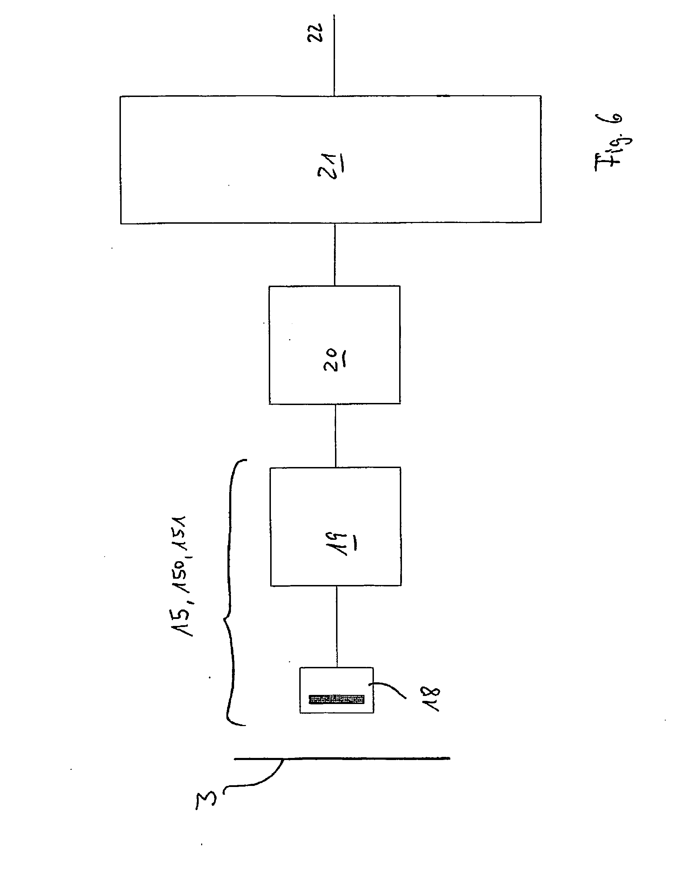

Figur 6 zeigt schematisch den Aufbau der Signalverarbeitung in dem Steuergerät. Die Sensoranordnung 15 bzw. 150, 151 wird gebildet durch einen Schwingkreis 18 und einem mit diesem verbundenen Messschaltkreis 19. Der Schwingkreis 18 wird mit elektrischer Energie angeregt und erzeugt so ein elektromagnetisches Feld, in dem sich die Saite 3 befindet. Durch eine Lageveränderung der Saite 3 relativ zu dem Schwingkreis 18 erfolgt eine Rückkopplung auf die Spannungs- bzw. Stromversorgung des Schwingkreises 18, die in dem Messschaltkreis 19 ausgewertet wird. Entsprechende, diese Veränderungen repräsentierende Signale werden über einen Interface-Schaltkreis 20, der als separater Schaltkreis ausgebildet oder aber auch in dem darauf folgenden Mikroprozessor 21 integriert sein kann, zu dem Mikroprozessor 21 gegeben. Dort werden die so erhaltenen Daten ausgewertet und daraus auf eine Steuerdatenausgangsleitung 22 gelegte Steuerdaten erzeugt, die an die Spielkonsole zur Steuerung derselben übertragen werden. Die auf der Steuerdatenausgangsleitung 22 liegenden Datensätze sind dabei in einem für die Spielkonsolen verwertbaren Format, z.B. als MIDI-Daten formatiert.

Wird das erfindungsgemäße Steuergerät 10 bzw. 100 in der gezeigten Weise im Zusammenhang mit einer E-Gitarre verwendet, so wertet der Mikroprozessor 21 von den Sensoranordnungen 15, 150, 151 erhaltene Messdaten nach folgenden Kriterien aus: Durch eine statische Veränderung des Abstandes der Saite 3 zu der Sensoranordnung 15, 150 bzw. 151 entnimmt der Mikroprozessor 21, dass die zugehörige Saite 3 am Bund niedergedrückt worden ist. Durch die entsprechende Abstandsveränderung kann die Sensorenanordnung 15, 150, 151 bereits eine grobe Vorauswahl des von der Bedienperson zu spielenden beabsichtigten Tones treffen, ferner erkennt sie, dass die niedergedrückte Saite in absehbarer Zeit angeschlagen und ein Ton erzeugt werden soll, kann also die weitere Datenverarbeitung und Erzeugung der Steuersignale bereits vorbereiten.

Wird die Saite tatsächlich angeschlagen, so erkennt die Sensoranordnung 15, 150, 151 eine dynamische Abstandsveränderung, die in dem Mikroprozessor 21 hinsichtlich der Amplitude, die ein Signal für die Lautstärke des erzeugten Tones gibt, und hinsichtlich der Frequenz, die die tatsächliche Lage des Tones angibt, ausgewertet wird. Weitere Auswertungen können sich ergeben aus einer Verwendung von zwei Sensoranordnungen 150, 151 pro Sensorfeld, indem ein seitlicher Versatz der Saite durch so genanntes Bending mit erfasst wird. Solche Daten kann der Mikroprozessor 21 ebenfalls auswerten, um entsprechende Steuersignale auf dem Steuerdatenausgang 22 zu geben, die der Spielkonsole zugeführt und für die Steuerung des darauf laufenden Videospiels, insbesondere eines Simulationsspiels des Spielens eines Lauteninstrumentes, insbesondere einer E-Gitarre, verwendet werden.

Dabei ist wichtig festzustellen, dass mittels der Sensoranordnungen 15, 150, 151 kein Erfassen des tatsächlichen Tones des Lauteninstrumentes in der Weise erfolgt, als dass diese Daten für einen akustischen Signalausgang des Lauteninstrumentes verwendet werden könnten. Denn anders als die zwar auch elektromagnetisch arbeitenden Pick Ups 6, werden die Sensoranordnungen 15, 150, 151 nicht passiv zur reinen Aufnahme der im Umfeld eines Festmagneten schwingenden Saite und der damit erzeugten, dem Frequenzverlauf der Saite folgen elektrischen Signale betrieben, sondern aktiv mit einer vorgegebenen Frequenz angeregt. Wollte man die dort erhaltenen elektrischen Signale als akustischen Ausgang verstärken, so wären diese stets durch die Eigenfrequenz des Schwingkreises 18 überlagert, demgegenüber fehlten aber die Obertöne, die mit einer solchen Anordnung anders als bei der passiven Pick-Up Schaltung nicht aufgenommen werden können. Die Sensoranordnungen 15, 150, 151 dienen also allein der Bestimmung des Abstandes der Saiten, aus der dann die entsprechenden Steuerdaten rechnerisch ermittelt und von dem Mikroprozessor 21 als Steuersignale, z.B. im Datenformat midi an die Spielkonsole weitergegeben werden.

Schließlich ist klar, dass das zuvor insbesondere anhand der Figur 6 erläuterte Verfahren ebenso gut, auch mittels fest auf dem Lauteninstrument (hier er E-Gitarre 1) installierten Elementen Sensoranordnung 15 bzw. 150, 151 und zugehörigen Schaltkreisen 20 sowie Mikroprozessor 21 durchgeführt werden kann.

### Bezugszeichenliste

- 1: E-Gitarre
- 2: Hals
- 3, 3a-f: Saite
- 4: Korpus
- 5: Befestigungsvorrichtung
- 6: Pick-Up
- 7: Anschluss
- 10: Steuergerät
- 11: Gehäuse
- 12: Seitenabschnitt
- 13: Seitenabschnitt
- 14: Sensorabschnitt
- 15, 15a-f: Sensoranordnung
- 16: Tasterschalter
- 17: Tasterschalter
- 18: Schwingkreis
- 19: Messschaltkreis
- 20: Interface-Schaltkreis
- 21: Mikroprozessor
- 22: Steuerdatenausgangsleitung
- 100: Steuergerät
- 150, 150a-f: Sensoranordnung
- 151, 151a-f: Sensoranordnung

## Patentansprüche

1. Steuergerät für eine Spielkonsole mit einem Gehäuse (11), einem in dem Gehäuse (11) angeordneten elektronischen Steuerelement (21), an dem Gehäuse (11) angeordneten, mit dem Steuerelement (21) verbundenen Eingabeelementen (16, 17, 15, 150, 151) sowie einer Datenübermittlungseinrichtung zum Übermitteln von Steuerdaten an die Spielkonsole, wobei das Gehäuse (11) einen Sensorabschnitt (14) aufweist, in welchem in der Anzahl der Saiten (3) eines Lauteninstrumentes (1) entsprechender Anzahl und in dem Abstand der Saiten (3) des Lauteninstrumentes (1) entsprechendem Abstand Eingabeelemente in Form von Sensorfeldern angeordnet sind, wobei das Steuergerät (10, 100) so eingerichtet ist, dass es mit dem Sensorabschnitt (14) derart unterhalb der Saiten (3) des Lauteninstrumentes (1) angeordnet werden kann, dass die Sensorfelder unterhalb jeweils einer diesem Sensorfeld zugeordneten Saite (3) zu liegen kommen, ohne diese zu berühren, und wobei die Sensorfelder zum Erfassen eines Abstandes der jeweils zugeordneten Saite (3) zu dem Sensorfeld und zur Ausgabe eines diesen Abstand repräsentierenden Abstandssignals eingerichtet sind, wobei das Steuerelement zur Auswertung dynamischer, ein Schwingen der jeweils zugehörigen Saiten anzeigende Abstandsignale, die es von den Sensorfeldern empfängt, und zur Erzeugung und Ausgabe von auf einer solchen Auswertung der dynamischen Abstandssignale basierenden Steuersignalen an eine Spielkonsole eingerichtet ist, **dadurch gekennzeichnet, dass** das Steuerelement ferner zur Auswertung statischer Abstandsignale, die es von den Sensorfeldern empfängt, und zur Erzeugung und Ausgabe von auf einer solchen Auswertung statischer Abstandssignale basierenden Steuersignalen an eine Spielkonsole eingerichtet ist .

2. Steuergerät nach Anspruch 1, **dadurch gekennzeichnet, dass** im Bereich der Sensorfelder Sensoranordnungen (15, 150, 151) zur induktiven Abstandszumessung angeordnet sind.

3. Steuergerät nach Anspruch 2, **dadurch gekennzeichnet, dass** pro Sensorfeld quer zu einer Längsrichtung der in der vorgesehenen Anordnung des Steuergerätes (10, 100) mit seinem Sensorabschnitt (14) unterhalb der Saiten (3) des Lauteninstrumentes (1) über dem Sensorfeld verlaufenden Saiten (3) versetzt zueinander zwei Sensoranordnungen (150, 151) zur induktiven Abstandsmessung angeordnet sind.

4. Steuergerät nach einem der vorhergehenden Ansprüche, **dadurch gekennzeichnet dass** es als weitere Eingabeelemente neben den Sensorfeldern herkömmliche Steuerknöpfe (16, 17) und/oder Steuerkreuze aufweist.

5. Steuergerät nach einem der vorhergehenden Ansprüche, **dadurch gekennzeichnet, dass** das Gehäuse (11) einen flachen mittleren Abschnitt, der den Sensorabschnitt (14) bildet, und gegenüber dem mittleren Abschnitt verbreiterten äußere Abschnitte (12, 13) aufweist.

6. Steuergerät nach einem der vorhergehenden Ansprüche, **dadurch gekennzeichnet, dass** es einen in dem Gehäuse (11) angeordnete elektrische Versorgungseinheit, insbesondere einen Akkumulator, aufweist.

7. Steuergerät nach Anspruch 6, **gekennzeichnet durch** einen Ladeanschluss zum Verbinden eines Ladekabels mit der elektrischen Versorgungseinheit.

8. Steuergerät nach einem der vorhergehenden Ansprüche, **dadurch gekennzeichnet, dass** die Datenübermittlungseinrichtung einen Übermittlungskanal zum drahtlosen Übermitteln von Steuerdaten an die Spielkonsole aufweist.

9. Steuergerät nach einem der vorhergehenden Ansprüche, **dadurch gekennzeichnet, dass** das elektronische Steuerelement (21) ein Mikroprozessor ist.

10. Steuergerät nach einem der vorhergehenden Ansprüche, **dadurch gekennzeichnet, dass** es auf einer Unterseite Befestigungselemente zum lösbaren Befestigen an dem Lauteninstrument (1) mit unterhalb der Saiten (3) angeordnetem Sensorabschnitt (14) aufweist.

11. Verfahren zum Erzeugen von Steuersignalen für die Steuerung einer Spielkonsole mithilfe eines Lauteninstrumentes, wobei unterhalb einer jeder der Saiten wenigstens eine der jeweiligen Saite zugeordnete, zur Ausgabe eines zu dem Abstand der zugeordneten Saite zu der Sensoranordnung korrelierenden Abstandssignals eingerichtete Sensoranordnung angeordnet werden, mit den Sensoranordnungen die während eines Spiels des Lauteninstrumentes durch eine Bedienperson auftretenden Abstandsveränderungen der Saiten zu den jeweiligen Sensoranordnungen mittels letztgenannter erfasst und entsprechende Abstandsignale an eine Auswerteeinrichtung gegeben werden, dass die Abstandssignale der Sensoranordnungen in der Auswerteeinrichtung hinsichtlich eines Spiels des Lauteninstrumentes vorgenommen und entsprechende für die Spielkonsole verwertbare Steuersignale erzeugt und ausgegeben werden, **dadurch gekennzeichnet, dass** neben der Erfassung von dynamischen, ein Schwingen der jeweils zugehörigen Saiten anzeigenden Abstandsveränderungen mittels der Sensoranordnung auch statische Abstandsveränderungen erfasst werden, entsprechende, diese statischen Abstandsveränderungen repräsentierende Abstandssignale an die Auswerteinrichtung gegeben werden und von der Auswerteeinrichtung basierend auf den statischen Abstandssignalen für die Spielkonsole verwertbare Steuersignale erzeugt und ausgegeben werden.

12. Verfahren nach Anspruch 11, **dadurch gekennzeichnet, dass** in der Auswerteeinrichtung eine Auswertung hinsichtlich des Spiels des Lauteninstrumentes im Hinblick auf einen jeweils an einer Saite angeschlagenen Ton, dessen Lautstärke und der zeitlichen Abfolge der angeschlagenen Töne erfolgt.

13. Verfahren nach einem der Ansprüche 11 oder 12, **dadurch gekennzeichnet, dass** die von der Auswerteinrichtung erzeugten Steuersignale für die Spielkonsole nach dem MIDI-Standard erzeugt werden.

## Claims

1. A control apparatus for a game console fitted with a casing (11), an electronic control element (21) arranged in the casing (11), with input elements (16, 17, 15, 150, 151) arranged on the casing (11) and connected to the control element (21) as well as a data transmission device for transmitting control data to the game console, whereas the casing (11) exhibits a sensor section (14) in which input elements are arranged in the form of sensor fields, in the number of strings corresponding to the number of strings (3) of a lute-type instrument (1) and with distance corresponding to that of the strings (3) of the lute-type instrument (1), whereas the control apparatus (10, 100) is installed in such a way that it can be arranged with the sensor section (14) beneath the strings (3) of the lute-type instrument (1) so that the sensor fields are situated respectively beneath one of the strings (3) associated with said sensor field, without touching them, and whereas the sensor fields are designed for detecting a distance of the respectively associated (3) with respect to the sensor field and for outputting a distance signal representing said distance, whereas the control element is designed for interpreting dynamic distance signals showing a vibration of the respectively corresponding strings, signals that it receives from the sensor fields, and is designed for generating and for outputting to a game console control signals based on such an interpretation of the dynamic distance signals, **characterised in that** the control element is moreover designed for interpreting static distance signals that is receives from the sensor fields, and for generating and for outputting to a game console control signals based on such an interpretation of the static distance signals.

2. A control apparatus according to claim 1, **characterised in that** sensor configurations (15, 150, 151) for inductive measurement of distances are arranged in the region of the sensor fields.

3. A control apparatus according to claim 2, **characterised in that** two sensor configurations (150, 151) for inductive measurement of distances are arranged, offset to one another, for each sensor field crosswide to a longitudinal direction of the strings (3) running across the sensor field in the provided configuration of the control apparatus (10, 100) with its sensor section (14) beneath the strings (3) of the lute-type instrument (1).

4. A control apparatus according to any of the preceding claims, **characterised in that** it has conventional control buttons (15, 17) and/or control sticks as additional input elements other than the sensor fields.

5. A control apparatus according to any of the preceding claims, **characterised in that** the casing (11) exhibits a flat middle section, forming the sensor section (14), and external sections (12, 13) widened with respect to the middle section.

6. A control apparatus according to any of the preceding claims, **characterised in that** it has an electric power supply located in the casing (11), in particular an accumulator.

7. A control apparatus according to claim 6, **characterised by** a charge connector for connecting a charging cable to the electric power supply.

8. A control apparatus according to any of the preceding claims, **characterised in that** the data transmission device exhibits a forwarding passage for wireless forwarding of control data to the game console.

9. A control apparatus according to any of the preceding claims, **characterised in that** the electronic control element (21) is a microprocessor.

10. A control apparatus according to any of the preceding claims, **characterised in that** it comprises fastening elements on a lower side for detachable fastening to the lute-type instrument (1) with a sensor section (14) arranged beneath the strings (3).

11. A method for generating control signals for controlling a game console using a lute-type instrument, whereas at least one sensor configuration, associated to the respective string, designed for outputting a distance signal correlating the distance of the associated string to the sensor configuration, is arranged beneath one of each of the strings, with the sensor configurations which detect the modifications of distance of the strings when playing said lute-type instrument with respect to the respective sensor configurations and then send the corresponding distance signals to an interpretation device, so that the interpretable distance signals of the sensor configurations in the interpreting device are generated and outputted accordingly when playing said lute-type instrument for the game console, **characterised in that** in addition to the detection of dynamic modifications of distance, also static modifications of distance displaying a vibration of the respective associated strings are detected by means of the sensor configuration, corresponding distance signals representing said static modifications of distance are transmitted to the interpretation device and interpretable control signals are generated and outputted by the interpretation device on the base of the static distance signals for the game console.

12. A method according to claim 11, **characterised in that** the playing of the lute-type instrument in terms of sound generated on a respective string, of volume and of chronological sequence of the sounds produced, is interpreted in the interpretation device.

13. The method according to any of the claims 11 or 12, **characterised in that** the control signals generated by the interpretation device are generated for the game console according to the MIDI standard.

## Revendications

1. Appareil de commande pour console de jeux présentant un carter (11), un élément de commande électronique disposé dans le carter (11), des éléments de saisie (16, 17, 15, 150, 151) connectés à l'élément de commande (21) et disposés sur le carter (11), de même qu'un dispositif de transmission des données pour transmettre des données de commande à la console de jeux, tandis que le carter (11) comporte une partie capteur (14), dans lequel des éléments de saisie sous forme de champs de capteurs sont présents en nombre correspondant à celui des cordes (3) d'un instrument de lutherie (1) et avec une distance entre les cordes correspondant à la distance séparant les cordes (3) de l'instrument de lutherie (1), tandis que l'appareil de commande (10, 100) est conçu de telle sorte qu'il puisse être disposé avec la partie capteur (14) sous les cordes (3) de l'instrument de lutherie (1), que les champs de capteurs soient situés respectivement sous une corde (3) associée audit champ de capteurs, sans les toucher, et où les champ de capteurs sont conçus pour détecter une distance entre ladite corde (3) agencée de cette manière et le champ de capteurs et pour envoyer un signal de distance représentant cette distance, où l'élément de commande est conçu pour l'interprétation des signaux de distance dynamiques montrant une vibration de la corde respective, signaux qu'il reçoit des champs de capteurs, et pour générer et envoyer des signaux de commande à une console de jeux, signaux fondés sur ladite interprétation des signaux de distance dynamiques, **caractérisé en ce que** l'élément de commande est également conçu pour l'interprétation de signaux de distance statiques, qu'il reçoit des champs de capteurs, et pour générer et envoyer des signaux de commande à une console de jeux, signaux fondés sur ladite interprétation des signaux de distance statiques.

2. Appareil de commande selon la revendication 1, **caractérisé en ce que** des configurations de capteurs (15, 150, 151) sont disposées dans la zone des champs de capteurs pour une mesure inductive de la distance.

3. Appareil de commande selon la revendication 2, **caractérisé en ce que** deux configurations de capteurs (150, 151) pour la mesure inductive de la distance sont disposées pour chaque champ de capteurs perpendiculairement à une direction longitudinale des cordes (3) passant au-dessus du champ de capteurs, dans la configuration prévue de l'appareil de commande (10, 100) avec sa partie capteur (14) sous les cordes (3) de l'instrument de lutherie (1).

4. Appareil de commande selon l'une quelconque des revendications précédentes, **caractérisé en ce qu'**il comprend des boutons de commande (16, 17) ou des croisillons de commande traditionnels comme éléments de saisie supplémentaires en plus des champs de capteurs.

5. Appareil de commande selon l'une quelconque des revendications précédentes, **caractérisé en ce que** le carter (11) présente une partie plate médiane, formant la partie capteur (14) et des parties externes (12, 13) élargies par rapport à la partie médiane.

6. Appareil de commande selon l'une quelconque des revendications précédentes, **caractérisé en ce qu'**il présente une alimentation électrique agencée dans le carter (11), en particuler un accumulateur.

7. Appareil de commande selon la revendication 6, **caractérisé par** un raccord de chargement pour connecter un câble de chargement à l'alimentation électrique.

8. Appareil de commande selon l'une quelconque des revendications précédentes, **caractérisé en ce que** le dispositif de transmission des données comporte un canal de transmission pour la transmission sans fil de données de commande à la console de jeux.

9. Appareil de commande selon l'une quelconque des revendications précédentes, **caractérisé en ce que** l'élément de commande électronique (21) est un microprocesseur.

10. Appareil de commande selon l'une quelconque des revendications précédentes, **caractérisé en ce qu'**il présente en un côté inférieur des élément de fixations permettant la fixation de manière amovible à l'instrument de lutherie (1) avec une partie capteur (14) disposée sous la corde (3).

11. Procédé permettant de générer des signaux de commande pour la commande d'une console de jeux à l'aide d'un instrument de lutherie, où au moins une configuration de capteurs est installée sous l'une des cordes, conçue pour l'envoi d'un signal de distance corrélant la distance de la corde associée à ladite configuration de capteurs, et associée à ladite corde, avec les configurations de capteurs, lesquels capteurs détectant les modifications de distance des cordes par rapport auxdites configurations de capteurs pendant que l'on joue dudit instrument de lutherie, et des signaux de distance correspondants sont envoyés à un dispositif d'interprétation, que les signaux de distance des configurations de capteurs sont déposés dans le dispositif d'interprétation pour déterminer le jeu de l'instrument de lutherie, puis des signaux de commande correspondants pour la console de jeux sont générés et envoyés, **caractérisé en ce qu'**en plus de la détection de modifications de distance dynamiques, indiquant une vibration des cordes correspondantes respectives, des modifications de distance statiques sont également détectés à l'aide de la configuration de capteurs, des signaux de distance correspondants, représentant ces modifications de distance statiques, sont envoyés au dispositif d'interprétation, puis des signaux de commande interprétables sont générés et envoyés par le dispositif d'interprétation sur la base des signaux de distance statiques pour la console de jeux.

12. Procédé selon la revendication 11, **caractérisé en ce que** le jeu de l'instrument de lutherie est interprété dans le dispositif d'interprétation, en termes de son produit au niveau d'une corde, de volume et de séquence chronologique des sons produits.

13. Procédé selon l'une des revendications 11 ou 12, **caractérisé en ce que** les signaux de commande produits par le dispositif d'interprétation sont générés pour la console de jeux selon la norme MIDI.
